# EUROPÄISCHE PATENTSCHRIFT

(11) **EP 2 110 346 B1**
(45) Veröffentlichungstag und Bekanntmachung des Hinweises auf die Patenterteilung: **14.12.2011**
(21) Anmeldenummer: 09154866.9
(22) Anmeldetag: 11.03.2009
(51) Int. Cl.: B65G 47/22, B65G 47/71

(54) **Anordnung und Verfahren zum Transport und zur Synchronverteilung von Behältnissen**
Assembly and method for transporting and synchronously distributing containers
Agencement et procédé de transport et de distribution synchrone de récipients

(30) Priorität: 15.04.2008 DE 102008019081
(43) Veröffentlichungstag der Anmeldung: 21.10.2009
(73) Patentinhaber: Krones AG, 93073 Neutraubling (DE)
(72) Erfinder: Seger, Martin, 92318, Neumarkt i. d. Opf (DE); Dirmeier, Emil, 93107, Wolkering (DE); Heigl, Stefan, 94345, Aholfing (DE); Arold, Helmut, 91522, Ansbach (DE); Käufl, Ludwig, 94344, Wiesenfelden (DE)
(74) Vertreter: Benninger, Johannes

(56) Entgegenhaltungen:
- EP-A- 0 619 251
- WO-A-2006/041298
- DE-A1- 19 751 967
- JP-U- 55 072 814
- US-A- 3 470 997
- US-A- 4 173 276
- US-A- 4 302 919
- US-A- 4 805 760

## Beschreibung

Die Erfindung bezieht sich auf eine Anordnung und ein Verfahren zur Synchronverteilung, bei der auf einer Transportvorrichtung, beispielsweise auf einem Transportband, ankommende Behälter auf wenigstens zwei weitere Transportvorrichtungen, insbesondere zwei weitere Transportbänder, aufgeteilt werden mit den Merkmalen des Oberbegriffs der Ansprüche 1 und 4.

Eine solche Anordnung ist aus EP 0 619 251 A1 bekannt, welches den Oberbegriff der Ansprüche 1 und 4 beschreibt.

Verteilungsvorrichtungen finden häufig in der Flaschentransport- und Verpackungstechnik Anwendung. Bevor Flaschen zu Gebinden verpackt werden, werden sie gefüllt und anschließend weiteren Verpackungsmaschinen zugeführt. Hierbei werden die Flaschen häufig über ein Transportband den nachfolgenden Maschinen zugeführt. Die weitere Verarbeitung erfolgt dabei häufig parallel auf mehreren Anlagen. Das bedeutet, dass der ankommende Flaschenstrom auf wenigstens zwei weitere Maschinen aufgeteilt werden muss.

Die zylindrischen Flaschen kommen auf dem ersten Transportband in ungleichmäßiger Verteilung an. Im Bereich vor der Auftrennung in zwei Transportbänder wird der Flaschenfluss auf dem Band zentriert. Die Zentrierung erfolgt mittels zweier schwenkbarer Klappen. Die so zentrierten Flaschen können sich möglichst statistisch, d.h. gleichmäßig auf die beiden anschließenden Transportbänder aufteilen.

Die bekannten Zentrier- Klappen sind mit Federn vorgespannt. Dadurch sind die Klappen beweglich, so dass auf unterschiedliche Behälterstrombreiten reagiert werden kann. Unterschiedliche Behälterstrombreiten kommen beispielsweise durch einen Rückstau zustande, bei dem die ankommenden Flaschen auflaufen.

Probleme ergeben sich, wenn auf eine Klappe mehr Flaschen treffen als auf die andere. Die Klappe, an der mehr Flaschen auftreffen, öffnet sich weiter, so dass der Durchlass dezentral angeordnet ist, was zu einem ungleichen Auslenken und somit zu einer ungleichen Verteilung des Behälterstroms auf die nachgeschalteten Förderer führt.

Dies wirkt sich unmittelbar negativ auf die nachfolgenden Maschinen aus, die nicht mehr synchron arbeiten können.

Die Aufgabe der Erfindung besteht somit darin, eine Anordnung zu schaffen, die einen Transport und eine gleichmäßige Aufteilung von Behältnissen von einer Transportvorrichtung auf zwei nachfolgende Transportvorrichtungen ermöglicht.

Dieses Ziel der Erfindung wird mit dem Gegenstand des unabhängigen Anspruchs 1 erreicht. Merkmale vorteilhafter Weiterbildungen der Erfindung ergeben sich aus den abhängigen Ansprüchen.

Eine weitere Aufgabe der Erfindung besteht darin ein Verfahren bereitzustellen, bei dem eine gleichmäßige Verteilung von Behältnissen von einer ersten auf zwei nachfolgenden Transportvorrichtungen erfolgt.

Dieses Ziel der Erfindung wird mit dem Gegenstand des unabhängigen Anspruchs 4 erreicht. Merkmale vorteilhafter Weiterbildungen der Erfindung ergeben sich aus den abhängigen Ansprüchen.

Eine erfindungsgemäße Anordnung zum Transport und zur Synchronverteilung von Behältnissen, insbesondere von Flüssigkeitsbehältern, beispielsweise Flaschen Dosen etc. aber auch von anderen Behältnissen, beispielsweise Kartons o.ä., weist eine ersten Transportvorrichtung auf, die sich in mindestens zwei in Transportrichtung anschließende Transportvorrichtungen verzweigt. Bei den Transportvorrichtungen handelt es sich vorzugsweise um Transport- bzw. Förderbänder. Vorzugsweise wird eine solche Anordnung zur Synchronverteilung von zylindrischen Flaschen verwendet.

Auf der ersten Transportvorrichtung werden die Behältnisse in einem stetig ankommenden Strom bereitgestellt und an so genannten Zentrier- Klappen auf dem ersten Transportband zentriert, damit sie gleichmäßig auf die nachfolgenden Transportbänder aufgeteilt werden können.

Erfindungsgemäß erfolgt eine mechanisch gekoppelte Bewegung der Klappen, so dass die durch die ankommenden Behältnisse verursachten Kräfte gleichmäßig auf die beiden Zentrier- Klappen verteilt werden, so dass ein perfekt zentraler, mittiger Durchlass entsteht. Die Flaschen werden dadurch gleichmäßig zentriert, so dass eine gleichmäßige Aufteilung auf die beiden nachfolgenden Förderer erfolgt und ein ungleiches Auslenken vermieden wird.

Insbesondere ist die Bewegung der beiden Klappen gegensinnig. D.h. die Bewegung der beiden Zentrierklappen ist so miteinander verbunden, dass sie jeweils denselben Öffnungswinkel gegenüber der Mitte des ersten Transportbandes aufweisen.

Erfindungsgemäß wird eine mechanische Kopplung der Klappenbewegung mit Hilfe mindestens einer Scheranordnung erreicht. Die Scheranordnung besteht aus Scherarmen, die über Verbindungs- und Führungselemente dreh- bzw. schwenkbeweglich an den Klappen befestigt sind und über eine Verbindungsfeder zu einer koordinierten Bewegung der beiden Klappen führen.

Dabei wird die Bewegung einer Klappe über die Scherarme der Scheranordnung und über eine zwischen den Scherarmen gespannten Feder direkt auf die andere Klappe übertragen, die dann dieselbe Bewegung durchführt. Die Feder dient insbesondere der zur Rückstellung der Bewegung der Scherarme in die Ruhelage.

Kommen an einer Klappe mehr Behältnisse an, so wirkt sich dies direkt in Form eines erhöhten Drucks an dieser Klappe aus. Die Klappe öffnet sich, wodurch es zu einer Auslenkung des Scherarms kommt. Diese Bewegung überträgt sich direkt auf den anderen Scherarm und aufgrund der Federkopplung direkt auf die andere Klappe, die sich ebenfalls entsprechend öffnet. Es entsteht eine exakt mittige Durchsatzöffnung und eine genaue Verteilung der Behälter auf die nachfolgenden Transportbänder ist möglich.

Erfindungsgemäß wird die gesteuerte synchrone Bewegung der Scherarme und somit der Klappen über einen an die Scherarme gekoppelten Linearantrieb oder einen Drehantrieb, beispielsweise einem Elektromotor, einem Luftzylinder o.ä. bewirkt. Wenigstens ein am Transportband angeordneter Sensor erfasst den ankommenden Behältnisstrom bzw. Behältnis- Durchsatzes, d.h. insbesondere die Menge der pro Zeiteinheit ankommenden Behältnisse, die Verteilung derselben auf dem Band und gegebenenfalls weitere Parameter. Die sensorisch ermittelten Werte werden an eine Auswerteeinheit weitergegeben, die aus den Parametern die benötigte Breite der Durchlassöffnung ermittelt und aufgrund des errechneten Ergebnisses den Motor entsprechend ansteuert.

Gemäß einer weiteren Ausführungsform kann das Schergestänge mit einem Hub- oder Schubelement gekoppelt sein. Das Hub- oder Schubelement wird gemäß dem sensorisch ermittelten Behälterstrom motorisch bewegt. Die Bewegung überträgt sich über die Scherarme auf die Klappen, so dass diese synchron geöffnet oder geschlossen werden können.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
- Figur 1: zeigt den bekannten Stand der Technik zur Synchronverteilung mit federgespannten Zentrier- Klappen;
- Figur 2a: zeigt eine Vorrichtung zur Synchronverteilung von oben, bei der eine Kopplung der Zentrier- Klappen mittels einer Scheranordnung erfolgt;
- Fig. 2b: zeigt eine frontale Darstellung einer Vorrichtung zur Synchronverteilung mit einer Kopplung der Klappen mittels einer Scheranordnung;
- Figur 3: zeigt eine Vorrichtung zur Synchronverteilung von oben, bei der eine Auslenkung der Zentrier- Klappen mittels eines Motors oder eines Luftzylinders erfolgt;
- Figur 4: zeigt eine Vorrichtung zur Synchronverteilung mit einer durch einen Luftzylinder angetriebenen Scheranordnung zur Kopplung der Klappen von oben;
- Figur 5: zeigt eine Vorrichtung zur Synchronverteilung mit einem Schubelement und einer Scheranordnung zur Kopplung der Klappen von oben und
- Figur 6: zeigt eine Vorrichtung zur Synchronverteilung mit einer Teil- Scheranordnung, und einer Kopplung der Klappen durch ein vertikal bewegliches Schub- bzw. Hubelement.

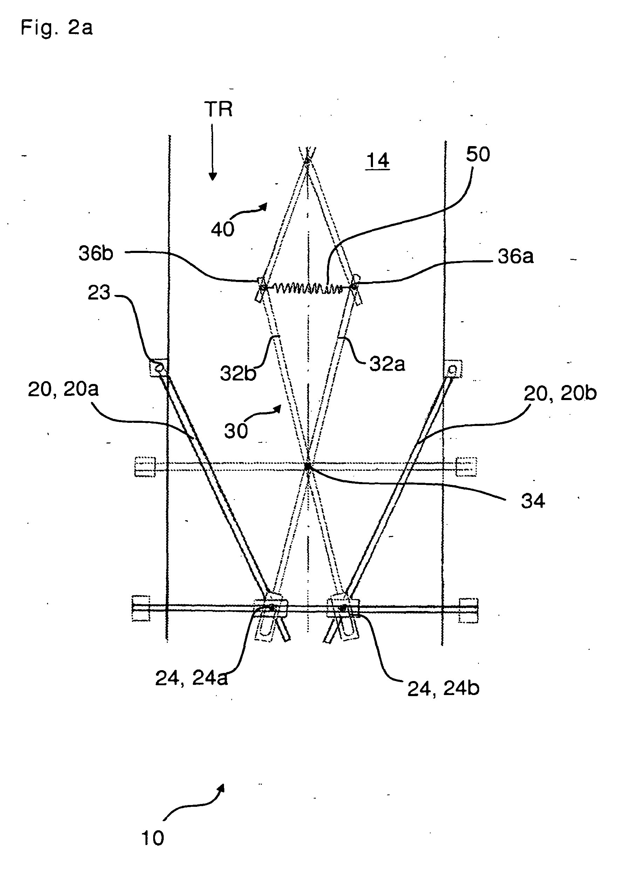

Eine Vorrichtung zur Synchronsteuerung bzw. Zentrieranordnung 10 ist in Figur 2a dargestellt.

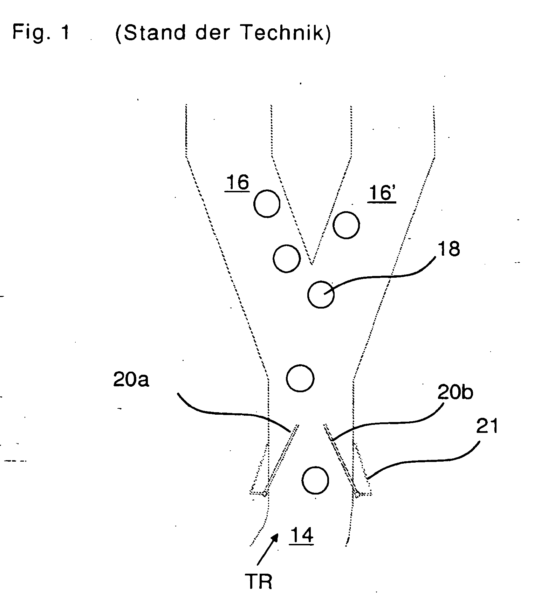

Der bekannte Stand der Technik ist in Figur 1 dargestellt. Zylindrische Flaschen 18 kommen auf dem ersten Transportband 14 in Transportrichtung TR einzeln, in unregelmäßigen Abständen und in ungleichmäßiger Verteilung an. Im Bereich vor der Auftrennung in zwei Transportbänder 16, 16' wird der Flaschenfluss auf dem Band zentriert. Die Zentrierung erfolgt mittels zweier Klappen 20a, 20b, die seitlich am Transportband 14 ortsfest und schwenkbeweglich befestigt sind und abhängig von der Größe der Flüssigkeitsbehälter voreingestellt werden können. Somit werden die Flaschen und der Flaschenfluss auf dem Band zentriert und können sich möglichst statistisch /gleichmäßig auf die beiden anschließenden Transportbänder bzw. Förderer 16, 16' aufteilen.

Die Zentrier- Klappen 20a, 20b sind gemäß dem Stand der Technik mit Federn 21 vorgespannt. Dies ist notwendig, da die Klappen 20a, 20b beweglich sein müssen, um auf unterschiedliche Behälterstrombreiten reagieren zu können. Diese unterschiedlichen Behälterstrombreiten kommen beispielsweise durch einen Rückstau zustande, bei dem die ankommenden Flaschen auflaufen.

Die Rückstellung der Klappen 20a, 20b in die voreingestellte Ruhelage wird durch eine Zugfeder 21 bewirkt. Kommen in derselben Zeit mehr Flaschen an den Klappen 20a, 20b an, dann erhöht sich der Druck auf die Klappen 20a, 20b und diese öffnen sich, so dass mehr Behälter durch den Durchlass gelangen und auf die beiden anschließenden Förderer 16, 16' verteilt werden.

Dabei ergibt sich das Problem, dass beispielsweise aufgrund der Geländeranordnung im Transportband 14 vorzugsweise mehr Flaschen an Klappe 20a ankommen, d.h. der Anlauf der Flaschen erfolgt bevorzugt auf dieser Seite. Dies bewirkt, dass ein höherer Druck an dieser Klappe 20a entsteht. An Klappe 20b ist der Druck dagegen aufgrund des geringeren Flaschenaufkommens geringer, so dass diese unter Umständen weniger oder nicht aufgedrückt wird. Somit besteht also die Gefahr, dass die durch die Klappen 20a, 20b voreingestellte Öffnung dezentriert wird, wodurch sich die Verteilung auf die beiden nachfolgenden Bänder 16, 16' verändert und keine statistische 50 zu 50 Verteilung mehr erfolgt.

Weitere Störfaktoren, die eine ungleiche Öffnung der Klappen bewirken können, stellen beispielsweise unterschiedliche Lagerreibung und unterschiedliche Federkraft der Zugfedern an den Klappen 20a und 20b dar. Die genannten und weitere Störfaktoren wirken sich unmittelbar auf die nachfolgenden Maschinen aus, die nicht mehr synchron arbeiten können.

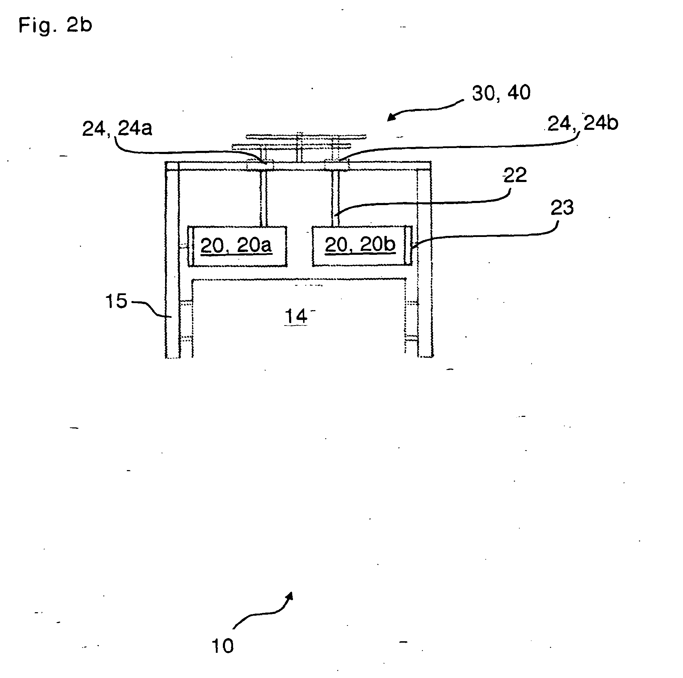

Figuren 2a und 2b zeigt eine so genannte Scherenanordnung 30 zur Synchronsteuerung der beiden Klappen 20a, 20b. Die Zentrier- Klappen 20a, 20b sind schwenkbeweglich an einer Rahmenkonstruktion 15 befestigt, der als Grundrahmen zur Befestigung alle weiteren Elemente der Anordnung 10 dient. Die beiden Klappen 20a, 20b sind jeweils über Verbindungselemente 22a, 22b an jeweils einer über dem Transportband angeordneten Führung 24a, 24b aufgehängt. An der Führung 24a, 24b ist weiterhin eine Scherenanordnung 30 befestigt, und zwar dergestalt, dass sich eine Bewegung einer der Klappen 20a, 20b direkt auf die Scherenanordnung 30 überträgt.

Die Scherenanordnung 30 besteht aus zwei miteinander an einem Überkreuzungspunkt bzw. einer Lagerung 34 drehbeweglich gekoppelten Scherarmen 32a; 32b. Die Scherarme 32a, 32b werden an der Lagerung 34 derart aufgeteilt, dass die jeweiligen Abschnitte zwischen dem Führungspunkt 24a und dem Lagerungspunkt 34 bzw. zwischen dem Führungspunkt 24b und dem Lagerungspunkt 34 genau dieselbe Länge aufweisen. Dasselbe gilt für die Abschnitte zwischen dem Lagerungspunkt 34 und den Endpunkten 36a und 36b. Die Scherarme 32a, 32b sind an ihren den Führungen 24a, 24b abgewandten Enden 36a, 36b an ein weiteres Schergestänge 40 gekoppelt. Zusätzlich erfolgt eine Kopplung über eine Feder 50.

Diese Anordnung bewirkt, dass sich aufgrund der mechanischen Kopplung ein erhöhter Druck auf eine der beiden Klappen 20a, 20b direkt auf die andere Klappe 20a, 20b auswirkt.

Wird beispielsweise die Klappe 20a durch erhöhten Flaschendruck zum Rand des Förderbandes hin gedrängt, bewirkt dies über die Führung 24a eine Auslenkung des Scherarms 32a. Diese Bewegung überträgt sich aufgrund der drehbeweglichen Lagerung im Lagerungspunkt 34 und der Verbindung mit einem weiteren Schergestänge 40 und der Feder 50 direkt über den Scherarm 32b auf die Klappe 20b, die sich entsprechend zum Rand hin öffnet.

Somit bekommt man immer eine absolut mittige Ausrichtung der Durchsatzöffnung, was wiederum zu einer exakten Verteilung der Behälter auf den nachgeschalteten Transportbändern führt.

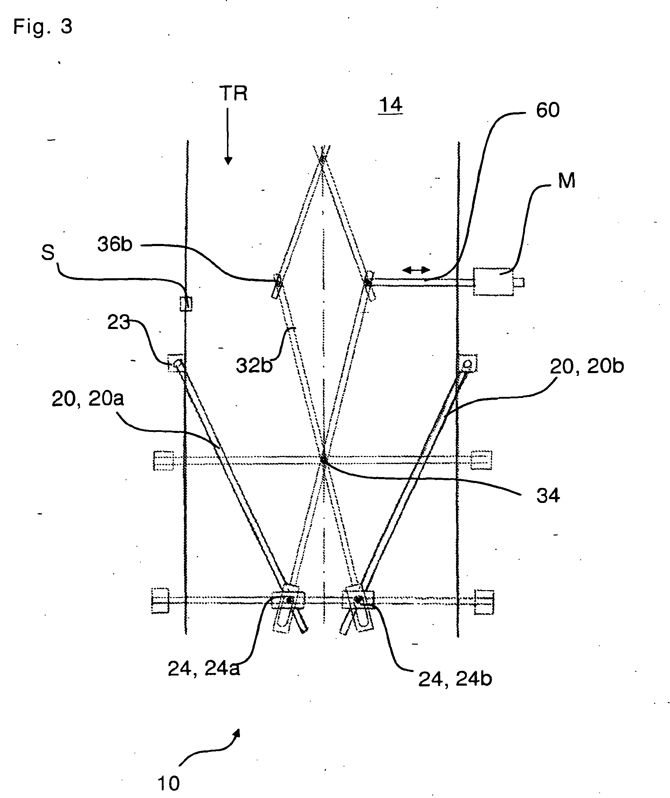

Fig. 3 zeigt eine Vorrichtung zur Synchronverteilung, bei der die ankommenden Behältnisse sensorisch erfasst werden. Dabei kann es sich um wenigstens einen punktuell angeordneten Sensor S handeln. Gemäß einer weiteren Ausführungsform ist die Verwendung einer Reihe von quer zur Transportrichtung angeordneten Sensoren vorgesehen. Die Sensoren S ermitteln beispielsweise die Menge, Position etc. der ankommenden Behältnisse und übermitteln diese an eine Rechnereinheit oder ähnlichem, die diese Ergebnisse direkt auswertet und an eine Steuerung übermittelt, die wiederum einen Motor M ansteuert. Der Motor M kann beispielsweise ein Motor mit innenliegender Gewindehohlwelle 60 sein, wobei der Motor M über die Hohlwelle 60 an die Schergestänge 30, 40 gekoppelt ist. Aufgrund der in der Beschreibung zu Figur 2 beschriebenen Schergestängeanordnungen 30, 40 erfolgt durch den Motor eine synchrone Verstellung der gekoppelten Klappen 20a, 20b.

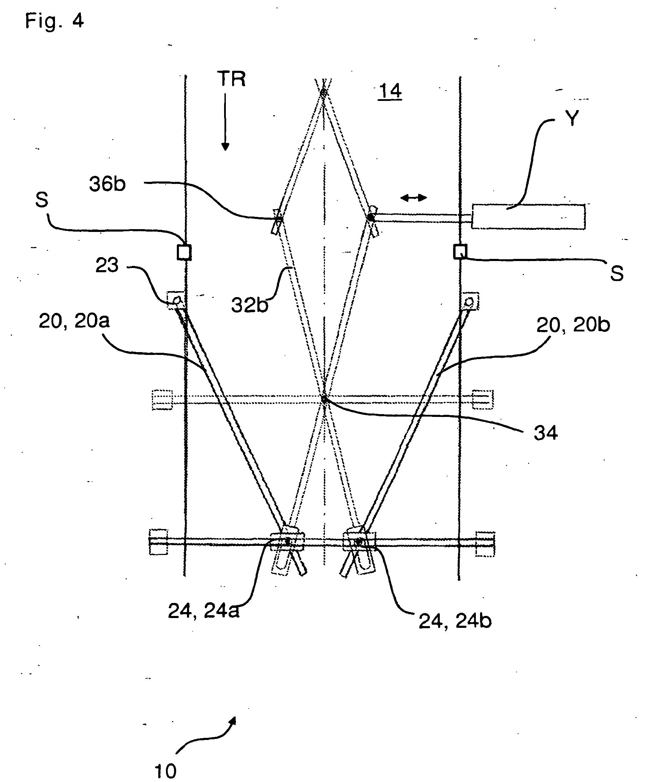

Fig. 4 zeigt eine weitere alternative Ausführungsform, die der Ausführungsform aus Figur 3 weitgehend entspricht, wobei anstelle des Motors M ein Luftzylinder Y zur Einstellung der Klappen 20a, 20b verwendet werden kann. In diesem Ausführungsbeispiel sind zwei an gegenüberliegenden Seiten des Transportbands angeordnete Sensoren zur Erfassung des Durchsatzes an Behältnissen gezeigt.

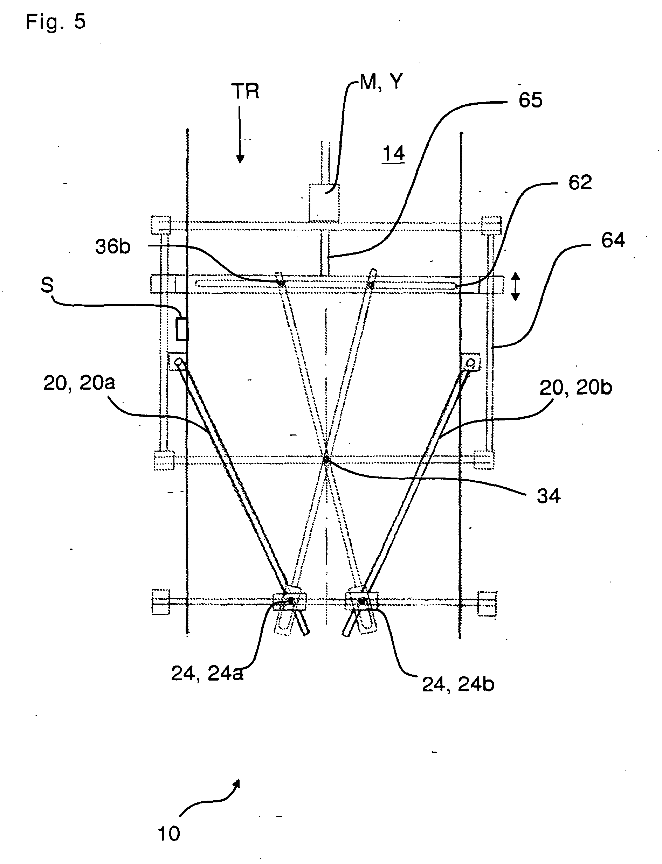

Fig. 5 zeigt die Verwendung eines Schubelements 62. Dieses wird anstelle des zweiten Schergestänges 40 und der Feder 50, des Motors M oder des Luftzylinders Y an den Endpunkten 26a, 26b der Scherarme 32a, 32b angeordnet. Das Schubelement 62 weist beispielsweise ein Langloch auf, in dem die Endabschnitte 36a, 36b der Scherarme 32a, 32b beweglich geführt sind. Das Schubelement 62 wird zudem in seitlichen Führungen 64, die im 90°- Winkel zum oben genannten Langloch angeordnet sind, sicher geführt. Dadurch wird ein Verkanten verhindert und ein synchrones Öffnen der Klappen 20a, 20b ermöglicht. Das Schubelement 62 ist über ein weiteres Verbindungselement 65 mit einem Motor M oder einem Luftzylinder Y o. ä. verbunden. Die Anordnung weist wiederum mindestens einen Sensor S zur Ermittlung des Flaschenstroms auf, aufgrund dessen der Motor M bzw. Luftzylinder Y entsprechend eingestellt und die Öffnung der Klappen entsprechend reguliert wird.

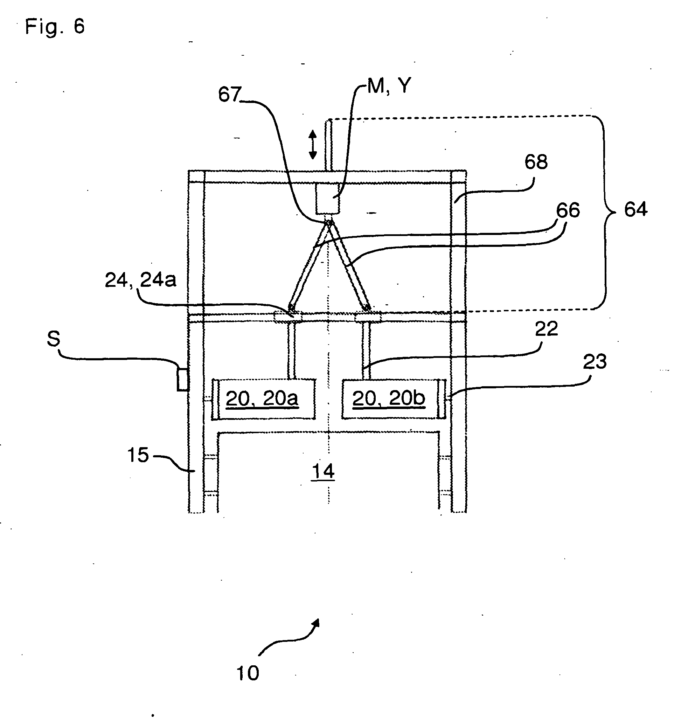

Figur 6 zeigt eine symmetrische, nach oben gerichtete Anordnung zum synchronisierten, gekoppelten Bewegen der Zentrier- Klappen 20a, 20b mittels einer Hubvorrichtung 64. Die Zentrier- Klappen 20a, 20b sind mit nach oben vom Transportband wegweisenden Verbindungselementen 22 ausgestattet, die an Führungen 24a, 24b aufgehängt sind. An diesen Führungen 24a, 24b sind weitere zwei Verbindungselemente 66 gleicher Länge befestigt, die oberhalb der beiden Klappen mittig miteinander drehbeweglich verbunden sind und in ihrem Verbindungspunkt 67 beispielsweise über eine Welle mit einem Motor M oder einen Luftzylinder Y verbunden sind und durch diesen bewegt werden können. Der Motor M bzw. der Luftzylinder Y wird wiederum aufgrund eines sensorisch vermittelten Signals entsprechend dem Flaschenaufkommen angesteuert. Durch Drücken nach unten werden die Zentrier- Klappen 20a, 20b geöffnet, während durch Zug nach oben der Durchlass durch Schließen der Zentrier- Klappen 20a, 20b verringert wird.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich, wie beansprucht, fallen.

## Patentansprüche

1. Anordnung zum Transport und zur Synchronverteilung (10) von Behältnissen, mit einer ersten Transportvorrichtung (14), die sich in Transportrichtung in zwei weitere Transportvorrichtungen (16, 16') verzweigt und zwei der ersten Transportvorrichtung zugeordnete, jeweils um eine im wesentlichen vertikale Achse schwenkbare Klappen (20a, 20b) zur Zentrierung der Behältnisse auf einem Transportband der ersten Transportvorrichtung, **dadurch gekennzeichnet, dass** die Zentrier- Klappen (20a, 20b) mechanisch miteinander gekoppelt sind und eine Durchlassöffnung für die Behältnisse bilden, wobei die Anordnung (10) mindestens eine Scheranordnung (30, 40) mit Scherarmen (32a, 32b), einen Linearantrieb oder einen Drehantrieb (M, Y) zur gesteuerten synchronen gegensinnigen Bewegung der Scherarme (32a, 32b), einen Sensor (S) und eine Auswerteeinheit umfasst, wobei die Breite der Durchlassöffnung anhand von sensorisch ermittelten Parameter errechenbar und durch motorische Ansteuerung der Scheranordnung (30, 40) einstellbar ist.

2. Anordnung nach Anspruch 1, **dadurch gekennzeichnet, dass** die Anordnung (10) eine Feder (50) zur Rückstellung der Bewegung in die Ruhelage der Scherarme (32a, 32b) der Scheranordnung (30, 40) aufweist.

3. Anordnung nach Anspruch 1 oder 2, **dadurch gekennzeichnet, dass** die Anordnung (10) ein Schubelement (62) oder ein Hubelement (64) zur Kopplung der Klappen (20a, 20b) aufweist.

4. Verfahren zum Transport und zur Synchronverteilung von Behältnissen, wobei die Behältnisse auf einer Transportvorrichtung (14) stetig bereitgestellt und auf zwei weitere Transportvorrichtungen (16, 16') aufgeteilt werden, wobei die Behältnisse auf der ersten Transportvorrichtung (14) mittels zweier Klappen (20a, 20b) zentriert werden, **gekennzeichnet durch** die folgenden Schritte:
• sensorische Ermittlung der in einem Strom auf dem ersten Transportband (14) ankommenden Behältnisse;
• Berechnung der benötigten Breite einer Durchlassöffnung **durch** eine Auswerteeinheit und
• synchrone motorische Ansteuerung der mechanisch gekoppelten gegensinnigen Bewegung von Scherarmen (32a, 32b) einer Scheranordnung (30, 40) **durch** die Auswerteeinheit zur Bildung der berechneten Durchlassöffnung.

5. Verfahren zur Synchronverteilung nach Anspruch 4, **dadurch gekennzeichnet, dass** die Rückstellung der Bewegung in die Ruhelage der Scherarme (32a, 32b) der Scheranordnung (30, 40) mittels einer Feder (50) erfolgt.

6. Verfahren zur Synchronverteilung nach einem der Ansprüche 5 bis 6, **dadurch gekennzeichnet, dass** der Motor (M, Y) ein Schubelement (62) oder ein Hubelement (64) bewegt, das die Bewegung der Scherarme (32a, 32b) bewirkt und somit zu einer synchronisierten Bewegung der Zentrierklappen (20a, 20b) führt.

## Claims

1. An arrangement for the transportation and the synchronous distribution (10) of packaging units, comprising a first transportation apparatus (14) branching out into two further transportation apparatuses (16, 16') in a transporting direction; wherein at least two flaps (20a, 20b) are associated with the first transporting apparatus (14) for centering the packaging units on a transportation conveyor of the first transportation apparatus (14) and wherein the at least two flaps (20a, 20b) are pivotable about a vertical axis, **characterized in that** the flaps (20a, 20b) are mechanically coupled to each other and form a passage for the packaging units, wherein the arrangement (10) comprises at least one pantograph arrangement (30, 40) having pantograph arms (32a, 32b), a linear drive or a rotary drive (M, Y) for the controlled synchronized movement of the pantograph arms (32a, 32b) in an opposite direction, a sensor (S) and an evaluation unit, whereby the width of the passage is calculated from the parameters detected by the sensor and whereby the width of the passage is adjusted by a motor driven control of the pantograph arrangement (30, 40).

2. An arrangement according to claim 1, whereby the arrangement (10) comprises a spring (50) for resetting the movement of the pantograph arms (32a, 32b) in the pantograph arrangement (30, 40) into a rest position.

3. An arrangement according to claim 1 or 2, wherein the arrangement (10) comprises a thrusting element (62) or a lifting element (64) for coupling the flaps (20a, 20b).

4. A method for the transportation and synchronous distribution of packaging units, whereby the packaging units are continuously supplied on a transportation apparatus (14) and whereby the packaging units are distributed onto two further transportation apparatuses (16, 16'), whereby the packaging units on the first transportation apparatus (14) are centered by means of at least two flaps (20a, 20b) **characterized by** the following steps:
• sensory determination of the flow of incoming packaging units on the first transportation conveyor (14),
• calculation of the required width of the passage by an evaluation unit and
• synchronous motor- driven control of the mechanically coupled movement of pantograph arms (32a, 32b) of a pantograph arrangement (30, 40) by the evaluation unit forming the calculated passage, whereby the pantograph arms (32a, 32b) move in an opposite direction.

5. A method for the synchronous distribution according to claim 4, whereby the movement of the pantograph arms (32a, 32b) in the pantograph arrangement (30, 40) into a rest position is reset by means of a spring (50).

6. A method for the synchronous distribution according to claim 5, whereby the drive (M, Y) is moving a thrusting element (62) or a lifting element (64), which causes the movement of the pantograph arms (32a, 32b) and which therefore causes a synchronized movement of the centering flaps (20a, 20b).

## Revendications

1. Arrangement pour le transport et pour la distribution synchronisée (10) de récipients, avec un premier dispositif de transport (14) qui se ramifie dans le sens de transport en deux autres dispositifs de transport (16, 16') et deux volets (20a, 20b) affectés au premier dispositif de transport, respectivement pivotants autour d'un axe essentiellement vertical pour le centrage des récipients sur une bande transporteuse du premier dispositif de transport, **caractérisé en ce que** les volets de centrage (20a, 20b) sont couplés mécaniquement l'un avec l'autre et forment un orifice de passage pour les récipients, étant donné que l'arrangement (10) comprend au moins un montage de cisaillement (30, 40) avec des bras de cisaillement (32a, 32b), un moteur linéaire ou un servomoteur multitours (M, Y) pour le mouvement synchronisé antagoniste commandé des bras de cisaillement (32a, 32b), un détecteur (S) et une unité d'évaluation, étant donné que la largeur de l'orifice de passage peut être calculée à l'aide de paramètres déterminés par voie sensorielle et réglée par excitation motrice du montage de cisaillement (30, 40).

2. Arrangement selon la revendication 1, **caractérisé en ce que** l'arrangement (10) présente un ressort (50) pour le rappel du mouvement à la position de repos des bras de cisaillement (32a, 32b) du montage de cisaillement (30, 40).

3. Arrangement selon la revendication 1 ou 2, **caractérisé en ce que** l'arrangement (10) présente un élément de poussée (62) ou un élément de levée (64) pour le couplage des volets (20a, 20b).

4. Procédé de transport et de distribution synchronisée de récipients, dans lequel les récipients sont constamment mis à disposition sur un dispositif de transport (14) et sont répartis sur deux autres dispositifs de transport (16, 16'), étant donné que les récipients sont centrés sur le premier dispositif de transport (14) au moyen de deux volets (20a, 20b), **caractérisé par** les étapes suivantes :
- détermination sensorielle des récipients arrivant dans un flux sur la première bande transporteuse (14) ;
- calcul de la largeur nécessaire d'un orifice de passage par une unité d'évaluation et
- excitation motrice synchronisée du mouvement mécanique couplé antagoniste de bras de cisaillement (32a, 32b) d'un montage de cisaillement (30, 40) par l'unité d'évaluation afin de former l'orifice de passage calculé.

5. Procédé de distribution synchronisée selon la revendication 4, **caractérisé en ce que** le rappel du mouvement à la position de repos des bras de cisaillement (32a, 32b) du montage de cisaillement (30, 40) se fait au moyen d'un ressort (50).

6. Procédé de distribution synchronisée selon l'une quelconque des revendications 5 à 6, **caractérisé en ce que** le moteur (M, Y) meut un élément de poussée (62) ou un élément de levée (64) qui entraîne le mouvement des bras de cisaillement (32a, 32b) et, ainsi, conduit à un mouvement synchronisé des volets de centrage (20a, 20b).
